Europäisches Patentamt

European Patent Office

Office européen des brevets

(19)

(11) Publication number: **0 155 057 B1**

# (12) EUROPEAN PATENT SPECIFICATION

(45) Date of publication of patent specification: **03.07.91**    (51) Int. Cl.⁵: **H02K 33/16**, H02K 33/06, F04B 35/04

(21) Application number: **85200345.8**

(22) Date of filing: **11.03.85**

(54) **Motor-compressor unit.**

(30) Priority: **13.03.84 NL 8400791**
     **09.07.84 IT 2180884**

(43) Date of publication of application:
**18.09.85 Bulletin 85/38**

(45) Publication of the grant of the patent:
**03.07.91 Bulletin 91/27**

(84) Designated Contracting States:
**AT CH DE FR GB IT LI NL SE**

(56) References cited:
| | |
|---|---|
| **EP-A- 0 022 499** | **DE-A- 2 603 681** |
| **DE-A- 3 025 633** | **DE-C- 582 931** |
| **DE-C- 856 480** | **DE-C- 932 172** |
| **FR-A- 685 090** | **FR-A- 1 502 162** |
| **US-A- 2 732 124** | **US-A- 3 959 673** |

**ELEKTROTECHNIK UND MASCHINENBAU,
vol. 96, no. 10, October 1979, pages 452-457,
Vienna, AT; Z. PEJSEK et al.: "Der schwin-
gende Synchronlinearmotor mit Dauermag-
neten als Resonanz-Zugkrafterrerger"**

(73) Proprietor: **N.V. Philips' Gloeilampenfabrieken
Groenewoudseweg 1
NL-5621 BA Eindhoven(NL)**

(72) Inventor: **Bianchi, Vittorio**
**c/o INT. OCTROOIBUREAU B.V. Prof. Holst-
laan 6
NL-5656 AA Eindhoven(NL)**
Inventor: **Hensing, Johannes Martinus M.**
**c/o INT. OCTROOIBUREAU B.V. Prof. Holst-
laan 6
NL-5656 AA Eindhoven(NL)**
Inventor: **Munnig Schmidt, Robert Han**
**c/o INT. OCTROOIBUREAU B.V. Prof. Holst-
laan 6
NL-5656 AA Eindhoven(NL)**

(74) Representative: **Gorter, Willem Karel et al
INTERNATIONAAL OCTROOIBUREAU B.V.
Prof. Holstlaan 6
NL-5656 AA Eindhoven(NL)**

## Description

The invention relates to a motor-compressor unit comprising a vibration motor having a magnetizable stator section, coils and a reciprocating armature with pole elements, and a compressor having a linearly reciprocating piston.

Such a motor-compressor unit is known from US-A-3,937,600. This known unit comprises a reciprocating slidable armature with pistons at opposite sides thereof. The armature is forced into a linear, vibrating movement in an alternating electromagnetic field. For such a linear motor it is essential that the size of the air gap between the armature poles and the stator poles is constant throughout the whole circumference in order to avoid great radial forces between the stator and the armature. If great radial forces appear these will also act upon the pistons and thus have a very bad influence on the bearing of the pistons in their respective cylinders (high friction, wear, lower efficiency). For this kind of motor it is therefore extremely important that the center lines of the armature and of the pistons coincide. This makes the manufacture of such a linear motor-compressor unit very difficult and expensive.

The object of the invention is to provide a motor-compressor unit which overcomes the mentioned bearing problems of the prior art motor compressor.

According to the invention the motor-compressor unit is characterized in that the motor is provided with

- two coils which are arranged opposite each other and between which a magnetizable core extends,
- two stator sections, each so arranged to define air gaps formed between respective end portions of the section and separate end faces the core which are remote from each other, said air gaps being concentric about an axis, at least one permanent magnet disposed disposed parallelly between one of the stator sections and the core with a magnet pole facing the core,

the motor further comprises a motor shaft concentric with said axis, said armature being pivotable about the motor shaft and having four pole elements arranged such that oscillation of the armature causes two pole elements to move into their respective air gaps and the other two pole elements to move out of their respective air gaps, said compressor having a lever connecting said piston to the pivotable motor shaft.

The armature and the piston are not rigidly connected anymore. The shaft bearing can easy be made within small tolerances and the dimensions of the air gaps between the pole elements and the stator sections respectively the core can be kept between well defined small limits. Possible unwanted radial forces in the air gaps do not have any influence on the piston. In this way an efficient, powerful motor-compressor having still a compact structure is obtained.

In DE-C- 582 931 a vibration motor is disclosed having a pivotally oscillating drive shaft. Although the operation of the motor is rather similar to the above described motor, the efficiency of this known motor is lower. Mainly this is caused by the fact that the air gap between the core and the pole element functions as an almost constant resistance in which hardly any flux change occurs.

Therefore in the construction according to the invention there are four separate pole elements which move in respective air gaps of a well defined limited lengths, i.e. that each end portion of the stator section, which forms a stator pole, is situated opposite a corresponding end face of the core, which forms a core pole and which has substantially the same length as the stator pole.

In one embodiment of the invention the connection between the lever and the piston comprises a bush rigid with the piston, and a cylindrical member disposed in said bush and provided with an aperture in which one end or finger of said lever is slidably disposed. The lever may have an U-shaped part, the arms of which being rigid with the motor shaft.

The invention will now be described in more detail, by way of example, with reference to the drawing, in which

Figure 1 shows diagrammatically the vibration motor in accordance with the invention,

Figure 2 is a sectional view of a first embodiment of the invention,

Figure 3 shows the vibration motor in a view taken on the lines III-III in Figure 2,

Figure 4 shows the vibration motor in a view taken on the lines IV-IV in Figure 2,

Figure 5 shows a second embodiment of the invention, and

Figure 6 shows a third embodiment,

Figure 7 is a diagrammatic vertical section through a motor compressor unit according to the invention,

Figure 8 shows a section on the line VIII-VIII of Figure 7,

Figure 9 is a diagrammatic perspective view of the rotor of the vibration motor,

Figure 10 is a diagrammatic section, taken perpendicular to its axis, through a compressor of another embodiment of a motor compressor unit according to the invention

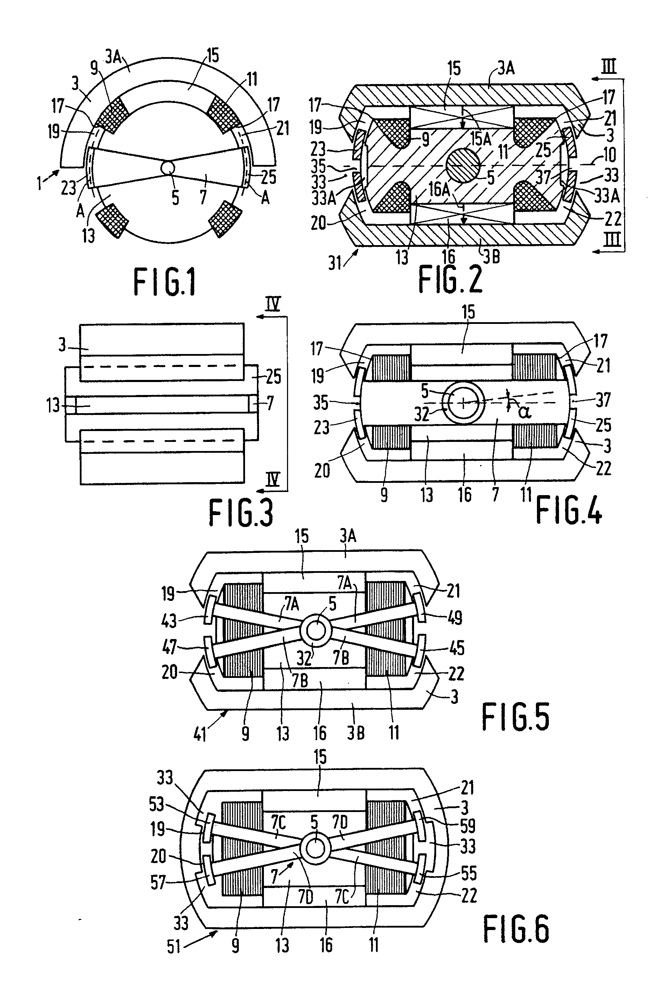

The vibration motor of the motor compressor unit in accordance with the invention which is shown diagrammatically in Figure 1 bears the reference numeral 1 and comprises a stator 3 and an armature 7 which is reciprocable about a motor shaft 5. The vibration motor 1 further comprises two coils 9 and 11 (shown in cross-section of the sake of clarity), between which a magnetizable core 13 extends. A magnet 15 is arranged between the core 13 and a stator section 3A which extends parallel to said core of which magnet one pole is positioned against the core 13 and the other pole against the stator section 3A. At the end faces 17 of the coils 9 and 11 which are remote from each other air gaps 19 and 21 are formed between the stator 3 and the core 13 in which the air gaps sliding elements 23 and 25 of the armature 7 are disposed. Since the armature 7 is pivotable about the motor shaft 5 the sliding elements 23 and 25 follow a circular path during their movements, as is indicated by the broken line A, the centre of said path being situated on the axis of the motor shaft 5. The air gaps 19 and 21 have arcuate shapes in conformity with the shape of the path A.

When the coils 9 and 11 are energized so that a suitable alternating current flows through the turns of the cores 9 and 11, an alternating magnetic field is produced around the coils 9 and 11, which field cooperates with the magnetic field produced by the magnet 15. The magnetic forces which then act on the sliding elements 23 and 25 give rise to an oscillatory movement of the armature 7 about the motor shaft 5, the sliding elements 23 and 25 being alternately drawn into the air gaps 19 and 21, respectively, by the magnetic forces.

Any retentive forces which may act between the sliding elements 23 and 25 and the stator 7 with the core 13 are directed radially relative to the motor shaft 5 and can be taken up simply by means of a rotary bearing.

Some vibration motors embodying the invention will be described with reference to Figures 2 to 6. Parts already mentioned in the above description of the principle of the vibration motor bear the same reference numerals as in Figure 1.

Figures 2, 3 and 4 show a first embodiment. The vibration motor 31 shown comprises two facing stator sections 3A and 3B of a stator 3, a magnet 15 being arranged between a ferromagnetic core 13 and the stator section 3A and a magnet 16 between the core 13 and the stator section 3B. The magnetic axis 16A of the magnet 16 is disposed in line with the magnetic axis 15A of the magnet 15. Two coils 9 and 11 are wound on the core 13, which coils have a common axis 10 which extends transversely of the magnetic axes 15A and 16A. A motor shaft 5 which is mounted in the core 13 extends transversely of the axes 10, 15A and 16A.

An armature 7 is pivotally mounted on the motor shaft 5 by means of a rotary bearing 32, known per se, and comprises two sliding elements 23 and 25. At the location of the sliding elements 23 and 25 the stator 3 is formed with through-going recesses 33 which divide the stator in two stator sections 3A and 3B which are spaced from each other. The recesses 33 serve to prevent magnetic short-circuits. In the present example the core 13 is formed with recesses 33A. It is obvious that the recesses 33 and 33A may be filled with a non-magnetizable material, such as a plastics.

Near each of the end faces of the coils 9 and 11 which are remote from each other two circularly arcuate air gaps 19, 20 and 21, 22, respectively, are formed between the stator 3 and the core 13, in which gaps the respective sliding elements 23 and 25 of the armature 7 are movable. The sliding elements 23 and 25 each have a slot, 35 and 37 respectively, which extends parallel to the motor shaft 5 and which serves to preclude loss of magnetic flux.

In the drawing the armature 7 is shown in a central position. Under operating conditions the armature 7 in the present embodiment has a maximum angular displacement amplitude of 7°.

Figure 5 is an axial view of a second embodiment of the invention. In the same way as the preceding embodiment the vibration motor 41 comprises a stator 3 with two stator sections 3A and 3B which are spaced from each other by recesses and between which a soft-iron core 13, a motor shaft 5, two coils 9 and 11, and two magnets 15 and 16 are arranged. Two air gaps 19, 20 and 21, 22 adjoin the coils 9 and 11 respectively.

In the present example the magnets 15 and 16 are arranged in such a way that two like magnet poles face each other, i.e. the magnets 15 and 16 are magnetized in opposite directions. A two-section armature is mounted on the motor shaft 5, the armature sections 7A and 7B being pivotable independently of each other. The armature sections 7A and 7B may be mounted on the motor shaft 5 by means of ball-bearings 32. Each of the armature sections 7A and 7B is provided with two sliding elements, the sliding elements 43 and 49 of the armature section 7A being movable in the air gaps 19 and 21, respectively and the sliding elements 47 and 45 of the armature section 7B being movable in the air gaps 20 and 22, respectively.

When the coils 9 and 11 are energized the armature sections 7A and 7B can move in opposite directions, which armature sections 7A and 7B may be coupled to a device to be driven, either independently or in combination.

For a vibration-free motor counterweights may be used in order to ensure that the centres of gravity of the armature sections 7A and 7B are situated on the axis of the motor shaft 5.

Figure 6 is an axial view of a third embodiment.

In the same way as in the preceding embodiments the vibration motor 51 comprises a stator 3, a core 13 with two coils 9 and 11, two magnets 15 and 16, four air gaps 19, 20 and 21, 22 and a motor shaft 5 which is mounted in the core 13 and which carries an armature.

The armature comprises two independently movable sections 7C and 7D which are each provided with two diametrically arranged sliding elements 53, 55 and 57,59, respectively. At the location of the sliding elements 53, 55, 57 and 59 the stator 3 has recesses 33. The construction of the vibration Rotor 51 in the present embodiment is asymmetrical, which is due to the non-symmetrical arrangement of the recesses 33. One of the recesses 33 is situated between the air gaps 21 and 22 and the two other recesses 33 are each situated on one side of the adjoining air gaps 19 and 20.

In the same way as in the preceding embodiment, the magnets 15 and 16 are magnetized oppositely, so that under operating conditions the two armature sections 7C and 7D reciprocate in phase opposition about the motor shaft 5.

The special construction of the vibration motor 51 results in a balanced symmetrical armature, so that counterweights may be dispensed with.

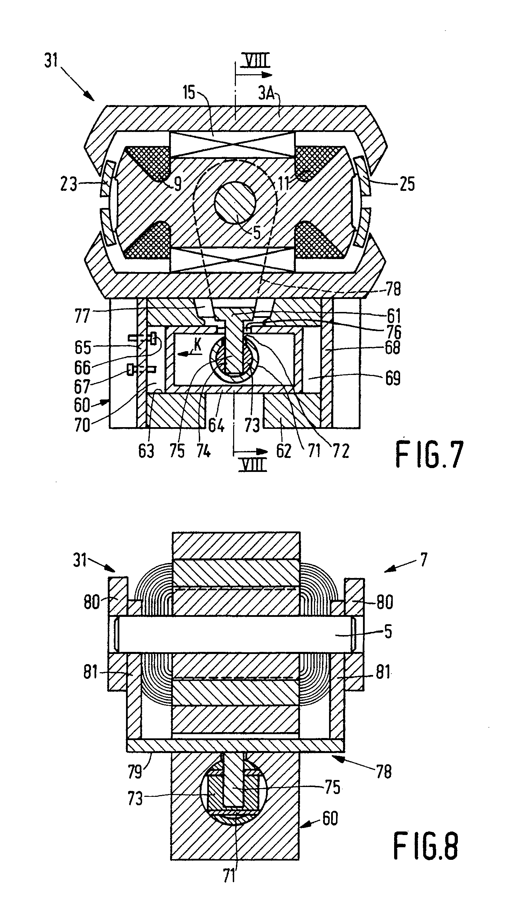

Figures 7, 8 and 9 illustrate the use of a vibration motor according to Figure 2 in a motor compressor unit.

With reference to the Figures, the motor compressor unit according to the invention comprises a vibration motor 31, a linear reciprocating compressor 60 and a linkage 61 for transmitting motion from the former to the latter.

The compressor 60 comprises a casing 62 defining a cylindrical cavity 63 in which a piston 64 is slidably mounted. The cavity 63 is closed at one end by a conventional plate 65 which carries a suction valve 66 and delivery valve 67 which are also conventional. The other end of the cavity 65 can be opened or closed by a plate 68, as shown, to form with one of the closed ends of the piston 64 a variable volume chamber 69 enclosing a mass of gas (for example air) which thus constitutes a gas spring. The other closed end of the piston 64 represents one of the walls of a variable volume chamber 70 in which for example the refrigerant fluid of a refrigeration circuit is compressed, it being drawn in and pushed out through the valves 66 and 67 respectively.

Transversely to the piston 64 there extends a bush 71 rigid therewith and provided with a passage 72 through its cylindrical wall. Inside said bush there is located a small cylinder 73 in such a manner as to be able to rotate about its geometrical axis. The small cylinder in question comprises a diametrical bore 74 into which there extends a finger 75 which passes both through the passage 72 and through two apertures 76 and 77 provided respectively in the piston 64 and in the casing 62 of the compressor 60.

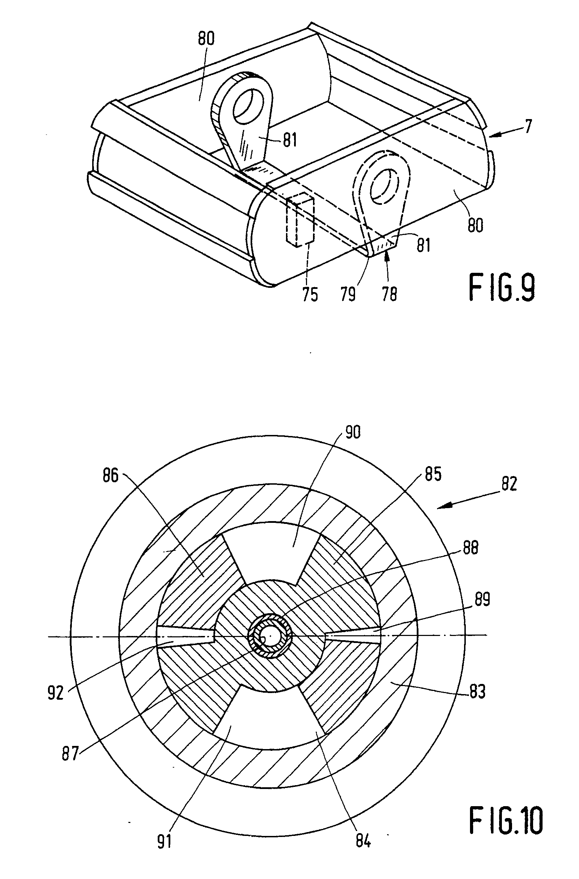

The linkage 61 comprises the small cylinder 73, and the finger 75 which forms an integral part of a lever 78 having a U-shaped part 79 (see Figures 8 and 9) which is rigid with the armature or rotor 7 of the vibration motor 31.

The rotor 7 comprises a pair of spaced-apart parallel side-pieces 80, to each of which is joined one of the arms 81 of the U-shaped part 79 of the lever 78.

Thus the to-and-fro movement of the rotor 7 is transmitted by the lever 78 and the finger 75 which slidably engages the bore 74, to the piston 64.

Figure 10 is a diagrammatic cross-section through the compressor of another embodiment of a motor compressor unit in which a vibration motor 41 according to Figure 5 is used.

The compressor 82 comprises a cylindrical casing 83 with at the ends side covers such as 84. Two oscillating pistons 85, 86 are disposed inside the compartment thus formed, and are driven by two concentric shafts 87, 88. The oscillating pistons comprise two opposing lobes having the configuration of a cylindrical segment and which pistons define two variable volume working chambers 89, 90 for compressing and transporting an operating fluid, and two variable volume chambers 91, 92 where trapped gas (for example air) acts as a gas spring. Said shafts 87, 88 can be directly connected to corresponding shafts of armature sections 7A and 7B of the vibration motor of Figure 5 by conventional couplings, not shown. Thus the oscillating movement in opposite directions of the armature sections 7A and 7B is directly transmitted to the pistons 85, 86.

## Claims

1.  A motor-compressor unit comprising a vibration motor (1) having magnetizable stator sections (3A, 3B), coils (9, 11) and a reciprocating armature (7) with pole elements (23, 25), and a compressor (60) having a linearly reciprocating piston (64), characterized in that the motor is provided with

    -   two coils (9, 11) which are arranged opposite each other and between which a magnetizable core (13) extends,
    -   two stator sections (3A, 3B), each so arranged to define air gaps (19, 21 - 20, 22) formed between respective end portions of the section and separate end faces of the core which are remote from each other, said air gaps being concentric about an axis, at least one permanent magnet (15, 16) disposed parallelly between one of the stator sections and the core with a magnet pole facing the core, the motor further comprises a motor shaft concentric with said axis, said armature being pivotable about the motor shaft and having four pole elements arranged such that oscillation of the armature causes two pole elements to move into their respective air gaps and the other two pole elements to move out of their respective air gaps, said compressor having a lever (78) connecting said piston (64) to the pivotable motor shaft (5).

2. A motor-compressor unit as claimed in Claim 1, characterized in that the connection between the lever (78) and piston (64) comprises a bush (71) rigid with this latter, and a cylindrical member (73) disposed in said bush and provided with an aperture (74) in which one end or finger (75) of said lever is slidalby disposed.

3. A motor-compressor unit as claimed in Claim 2, characterized in that the lever (78) has a U-shaped part (79), the arms (81) of which being rigid with the motor shaft (5).

**Revendications**

1. Unité de motocompresseur comportant, d'une part, un moteur à vibration (1) présentant des sections statoriques aimantables (3A, 3B), des bobines (9, 11) et un induit à mouvement de va-et-vient (7) muni d'éléments polaires (23, 25) et, d'autre part, un compresseur (60) présentant un piston à mouvement de va-et-vient linéaire (64), caractérisée en ce qu'il est muni de
   - deux bobines (9, 11) disposées en vis-à-vis et entre lesquelles s'étend un noyau aimantable (13),
   - deux sections statoriques (3A, 3B) disposées chacune de façon à définir des entrefers (19,21 - 20-, 22) formés entre, d'une part, des parties terminales correspondantes de la section et, d'autre part, des faces terminales séparées du noyau situées l'une à l'opposé de l'autre, lesdits entrefers étant concentriques autour d'un axe et au moins un aimant permanent (15, 16) étant disposé parallèlement entre l'une des sections statoriques et le noyau de façon qu'un pôle magnétique fait face au noyau, le moteur comportant en outre un arbre de moteur concentrique avec ledit axe, ledit induit pouvant pivoter autour de l'arbre de moteur et présentant quatre éléments polaires disposés de façon que l'oscillation de l'induit amène deux éléments polaires à entrer dans leurs entrefers correspondants et les deux autres éléments polaires à sortir de leurs entrefers correspondants,
   ledit compresseur présentant un levier (78) reliant ledit piston (64) à l'arbre de pivotement (5) du moteur.

2. Unité de motocompresseur selon la revendication 1, caractérisée en ce que la liaison entre le levier (78) et le piston (64) comporte un manchon solidaire (71) du piston et un élément cylindrique (73) disposé dans ledit manchon et présentant une ouverture (74) dans laquelle est disposée libre en coulissement une extrémité ou un doigt (75) dudit levier.

3. Unité de motocompresseur selon la revendication 2, caractérisée en ce que le levier (78) présente une partie en U (79) dont les ailes (81) sont solidaires de l'arbre (5) du moteur.

**Ansprüche**

1. Motor-Verdichtereinheit mit einem Schwingungsmotor (1) mit magnetisierbaren Ständerteilen (3A, 3B), Spulen (9, 11) und einem hin- und herbeweglichen Anker (7) mit Polelementen (23,24), sowie mit einem Verdichter (60) mit einem linear hin- und herbeweglichen Kolben (64), **dadurch gekennzeichnet**, daß der Motor mit den folgenden Elementen versehen ist:
   - zwei Spulen (9. 11), die einander gegenüber angeordnet sind und zwischen denen sich ein magnetisierbarer Kern (13) befindet,
   - zwei Ständerteilen (3A, 3B), die je derart angeordnet sind, daß sie Luftspalten (19, 21 - 20, 22) begrenzen, die zwischen den betreffenden Endteilen des Ständerteils und in einem Abstand voneinander liegenden einzelnen Endflächen des Kerns gebildet sind, wobei diese Luftspalten konzentrisch um eine Achse liegen, wobei wenigstens ein Dauermagnet (15, 16) parallel zwischen einem der Ständerteile und dem Kern mit einer demselben zugewandten Magnetpolfläche vorgesehen ist,
   wobei dieser Motor weiterhin eine zu der genannten Achse konzentrische Motorwelle aufweist, wobei der genannte Anker um die Motorwelle schwenkbar ist und vier Polelemente aufweist, die derart vorgesehen sind, daß eine Schwingung des Ankers verursacht, daß zwei Polelemente in ihren betreffenden Luftspalt hinein bewegen und die beiden anderen Polelemente aus ihren betreffenden Luftspalten heraus bewegen,
wobei der Verdichter einen Hebel (78) aufweist, der den Kolben (64) mit der schwenkbaren Motorwelle (5) verbindet.

2. Motor-Verdichtereinheit nach Anspruch 1, **dadurch gekennzeichnet,** daß die Verbindung zwischen dem Hebel (78) und dem Kolben (64) eine zu dem Kolben ortsfeste Büchse (71) aufweist, wobei in dieser Büchse ein zylinderförmiges Element (73) mit einer Öffnung (74) vorgesehen ist, in der ein Ende bzw. ein Finger (75) des genannten Hebels schiebbar vorgesehen ist.

3. Motor-Verdichtereinheit nach Anspruch 2, **dadurch gekennzeichnet,** daß der Hebel (78) einen U-förmigen Teil (79) aufweist, dessen Schenkel (81) mit der Motorwelle (5) ortsfest verbunden sind.

FIG.1

FIG.2

FIG.3

FIG.4

FIG.5

FIG.6

FIG.7

FIG.8

FIG.9

FIG.10